(19) Europäisches Patentamt

European Patent Office

Office européen des brevets

(11) Veröffentlichungsnummer: **0 349 742 B1**

(12) **EUROPÄISCHE PATENTSCHRIFT**

(45) Veröffentlichungstag der Patentschrift: **23.12.92**

(21) Anmeldenummer: **89108920.3**

(22) Anmeldetag: **18.05.89**

(51) Int. Cl.⁵: **B23B 31/16**

(54) **Kraftbetätigtes Spannfutter.**

(30) Priorität: **04.07.88 DE 3822506**

(43) Veröffentlichungstag der Anmeldung:
**10.01.90 Patentblatt 90/02**

(45) Bekanntmachung des Hinweises auf die
Patenterteilung:
**23.12.92 Patentblatt 92/52**

(84) Benannte Vertragsstaaten:
**CH FR GB LI**

(56) Entgegenhaltungen:
**DE-A- 2 605 299**
**FR-A- 2 248 901**
**GB-A- 2 025 808**

(73) Patentinhaber: **Paul Forkardt GmbH & Co. KG**
**Rosenstrasse 44-46**
**W-4000 Düsseldorf 30(DE)**

(72) Erfinder: **Stolzenberg, Hans**
**Bahnstrasse 2**
**W-4052 Korschenbroich 1(DE)**
Erfinder: **Schmitz, Karl-Heinz**
**Am Bach 19 a**
**W-4005 Meerbusch 3(DE)**

(74) Vertreter: **Patentanwälte Dipl.-Ing. Alex Sten-**
**ger Dipl.-Ing. Wolfram Watzke Dipl.-Ing.**
**Heinz J. Ring**
**Kaiser-Friedrich-Ring 70**
**W-4000 Düsseldorf 11(DE)**

**Beschreibung**

Die Erfindung betrifft ein kraftbetätigtes Spannfutter mit einem an einer drehend antreibbaren Spindel anzuordnenden Futterkörper und in radialen Führungen des Futterkörpers verschiebbar geführten Spannbacken, die durch mindestens ein im Futterkörper verschiebbar geführtes, von einem druckmittelbetätigten Krafterzeuger betägtigtes Antriebsglied antreibbar sind, wobei im Futterkörper mindestens ein mit Schmierfett befüllbarer Hohlraum ausgebildet ist, des über Schmierbohrungen mit zumindest einigen der Gleitflächen des Spannfutters in Verbindung steht und in den mindestens ein beim Antrieb der Spannbacken bewegtes Futterbauteil zur Erzeugung einer das Schmierfett in die Schmierbohrungen drückenden Pumpbewegung hineinragt.

Derartige kraftbetätigte Spannfutter sind aus der DE-A-26 05 299 bekannt. Bei dieser bekannten Konstruktion sind die mit Schmierfett befüllten Hohlräume am radial innenliegenden Ende des vorderen Teils der Grundbacken in einem Deckel ausgebildet, der auf die Frontfläche des eigentlichen Futterkörpers aufgesetzt ist und in dem die Grund- und Aufsatzbacken in radialen Führungen geführt sind. Bei dieser bekannten Konstruktion erzeugt somit eine radial innenliegende Fläche der Grundbacken die auf das Schmierfett wirkende Pumpbewegung. Hierbei ist es nachteilig, daß diese Pumpbewegung entgegengesetzt zu der auf das Schmierfett ausgeübten Fliehkraft wirkt.

Der Erfindung liegt die **Aufgabe** zugrunde, die aus der DE-A-26 05 299 bekannten Zwangsschmierung eines kraftbetätigten Spannfutters derart weiterzubilden, daß unter Berücksichtigung der auch auf das Schmierfett wirkenden Fliehkraft eine Ausführung geschaffen wird, die ohne Verwendung zusätzlicher Futterbauteile auskommt.

Die **Lösung** dieser Aufgabenstellung durch die Erfindung ist, bei einem Spannfutter der eingangs genannten Art, dadurch gekennzeichnet, daß jeder Spannbacke ein an einer radial außenliegenden Stelle im Futterkörper ausgebildeter Hohlraum zugeordnet ist, in dem ein mit der jeweiligen Spannbacke über einen im Futterkörper abgestützten Hebel verbundenes Ausgleichsgewicht angeordnet ist, und daß jedes Ausgleichsgewicht mit mindestens einer radial verlaufenden Nut zur Rückführung des aus den Gleitflächen austretenden Schmierfetts aufgrund der Fliehkraft in den Hohlraum ausgebildet ist.

Mit der erfindungsgemäßen Weiterbildung wird ein kraftbetätigtes Spannfutter geschaffen, bei dem die auf das Schmierfett wirkende Pumpbewegung durch die Fliehkraft-Ausgleichsgewichte eines an sich aus der GB-A-2 025 808 bekannten Fliehkraft-Ausgleichsfutters erzeugt wird. Hierbei ergibt sich der Vorteil, daß zur Bildung der Schmiermittelkammern kein zusätzliches Bauteil, wie beispielsweise der aus der DE-A-26 05 299 bekannte Deckel notwendig ist, und daß durch die in jedem Ausgleichsgewicht radial verlaufend ausgebildeten Nuten mit Hilfe der fliehkraft auch dasjenige Schmierfett in die Schmiermittelkammern zurückgeführt wird, das beim Schmiervorgang aus den Gleitflächen austritt. Hierdurch verringert sich nicht nur der Schmierfettbedarf, es werden auch unerwünschte Verschmutzungen der Umgebung durch unkontrolliert austretendes Schmierfett verhindert.

Zur Weiterbildung der Erfindung wird weiterhin vorgeschlagen, die Hohlräume über einen Ringkanal miteinander sowie mittels eines Versorgungskanals mit einem Schmiernippel zu verbinden, so daß ein Nachfüllen von Schmierfett entweder von Hand oder durch eine zentrale Schmierfettversorgung auf einfache Weise möglich ist.

Bei einer bevorzugten Ausgestaltung der Erfindung ist schließlich jede Spannbacke mit Schmierbohrungen versehen, die über eine im Hebel ausgebildete, einerseits in einer ein Hebelende aufnehmenden Anbohrung in der Spannbacke und andererseits in der radial verlaufenden Nut im Ausgleichsgewicht mündende Bohrung mit dem zugehörigen Hohlraum verbunden sind. Hierdurch ergibt sich eine besonders zuverlässige Führung des Schmierfetts innerhalb des Spannfutters.

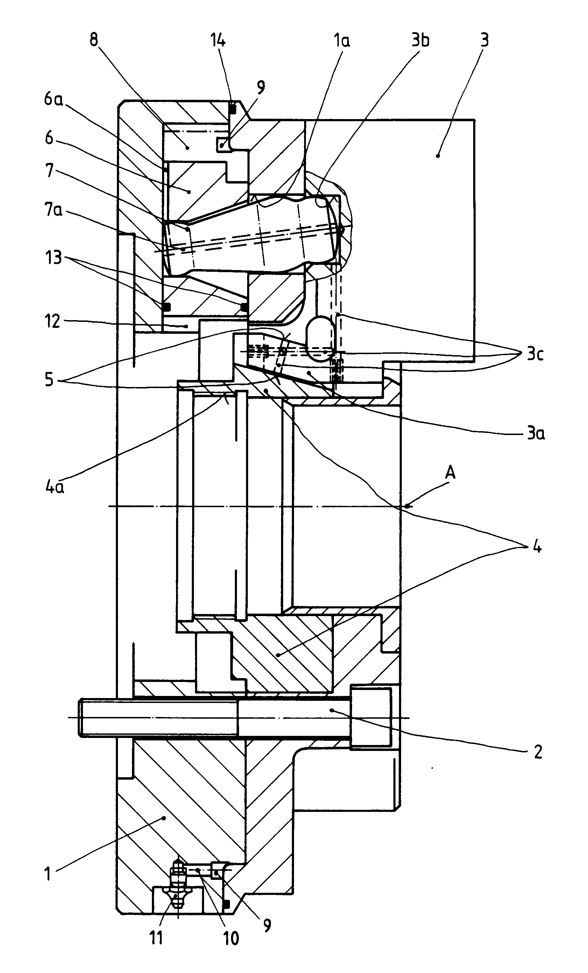

Auf der Zeichnung ist ein Ausführungsbeispiel eines erfindungsgemäßen Spannfutters anhand eines Längsschnittes durch ein Fliehkraft-Ausgleich-Futter mit Keilhakenantrieb dargestellt.

Die Zeichnung zeigt einen Futterkörper 1, der mittels Schrauben 2 am nicht dargestellten Flansch einer drehend antreibbaren Werkzeugmaschinenspindel befestigt wird. In radialen Führungen dieses Futterkörpers 1 sind beim Ausführungsbeispiel drei Spannbacken 3 verschiebbar geführt; wegen des Schnittverlaufes ist von diesen drei Spannbacken 3 lediglich eine zu erkennen. Jede dieser Spannbacken 3 steht über einen Keilhaken 3a mit einem die Keilhaken 3a in entsprechenden Aussparungen aufnehmenden Futterkolben 4 in Verbindung. Dieser Futterkolben 4 ist in axialer Richtung verschiebbar im Futterkörper 1 geführt und mit einem Innengewinde 4a versehen, über das er mit einer auf der Zeichnung nicht dargestellten Betätigungsstange verbunden wird, die ihrerseits mit dem ebenfalls nicht dargestellten Krafterzeuger in Verbindung steht, beispielsweise mit dem Kolben eines druckmittelbetätigten Zylinders, der am anderen Ende der Werkzeugmaschinenspindel angeordnet ist.

Da der Futterkolben 4 mit den Keilhaken 3a der Spannbacken 3 über Gleitflächen 5 in Verbindung steht, die zur Drehachse A des Spannfutters unter einem spitzen Winkel verlaufen, ergibt eine axiale Verschiebung des Futterkolbens 4 eine radiale Verstellbewegung der Spannbacken 3.

Um die bei hohen Drehzahlen des Spannfutters auf die Spannbacken 3 einwirkenden Fliehkräfte zur beseitigen bzw. erheblich zu verringern, sind beim Ausführungsbeispiel Ausgleichsgewichte 6 vorgesehen. Jeder Spannbacke 3 ist ein derartiges Ausgleichsgewicht 6 zugeordnet, wobei das Ausgleichsgewicht 6 mittig hinter der Spannbacke 3 im Futterkörper 1 angeordnet ist und über einen in einer Bohrung 1a des Futterkörpers 1 abgestützten Hebel 7 mit der Spannbacke 3 verbunden ist. Die Zeichnung zeigt, daß dieser Hebel 7 mit seinem vorderen Ende in eine Anbohrung 3b der Spannbacke 3 eingreift, wogegen sein hinteres Ende beweglich im Ausgleichsgewicht 6 angeordnet ist. Die auf die Spannbacke 3 radial nach außen wirkende Fliehkraft wird auf diese Weise durch eine entsprechende Kraft kompensiert, die aufgrund der auf das Ausgleichsgewicht 6 wirkenden Fliehkraft den Hebel 7 belastet, so daß dieser in zentripetaler Richtung die Spannbacke 3 belastet. Auf diese Weise kann zumindest ein Großteil der auf die Spannbacke 3 einwirkenden Fliehkraft kompensiert werden.

Die für die Ausgleichsgewichte 6 vorgesehenen Hohlräume 8 im Futterkörper 1 sind beim Ausführungsbeispiel miteinander durch einen im Futterkörper 1 umlaufenden Ringkanal 9 verbunden. An diesen Ringkanal 9 ist über einen Versorgungskanal 10 ein Schmiernippel 11 angeschlossen, über den die Hohlräume 8 mit geeignetem Schmierfett versorgt werden können.

Um dieses Schmierfett aus den Hohlräumen 8 insbesondere an die Gleitflächen 5 zwischen Futterkolben 4 und Spannbacken 3 zu führen, ist jedes Ausgleichsgewicht 6 mit einer radial verlaufenden Nut 6a versehen. Diese Nut 6a steht mit dem einen Ende einer im Hebel 7 ausgebildeten Bohrung 7a in Verbindung, die am anderen Ende in der Anbohrung 3b der Spannbacke 3 mündet. Von dieser Anbohrung 3b gehen mehrere in der Spannbacke 3 ausgeführte Schmierbohrungen 3c aus, die zu sämtlichen Gleitflächen 5 zwischen Spannbacke 3 und Futterkolben 4 führen. Selbstverständlich ist es auch möglich, auf der Zeichnung nicht dargestellte zusätzliche Schmierbohrungen vorzusehen, die zu den radial im Futterkörper 1 verlaufenden Gleitflächen zwischen der Spannbacke 3 und dem Futterkörper 1 führen.

Vor einer Inbetriebnahme des Spannfutters werden die Hohlräume 8 über den Schmiernippel 11, den Versorgungskanal 10 und den Ringkanal 9 mit Schmierfett gefüllt. Wenn das Spannfutter anschließend zum Einspannen eines Werkstückes, beispielsweise für eine Außenspannung, verwendet wird und hierbei die Ausgleichsgewichte 6 radial nach außen bewegt werden, erfolgt eine Verkleinerung der Hohlräume 8 durch die Ausgleichsgewichte 6. Hierdurch wird das im Hohlraum 8 befindliche Schmierfett durch die Nut 6a radial nach innen zum hinteren Ende des Hebels 7 gedrückt, wo es in die zentrale Bohrung 7a des Hebels 7 eintritt. Durch diese Bohrung 7a hindurch gelangt das Schmierfett in die Anbohrung 3b der Spannbacke 3 und von hier über die Schmierbohrungen 3c zu den Gleitflächen 5. Dieser Schmiervorgang wiederholt sich zwangsweise bei jeder Spannbewegung der Spannbacken 3, so daß die Gleitflächen 5 zwischen Spannbacken 3 und Futterkolben 4 zwangsweise geschmiert und damit über einen langen Zeitraum in einem gleichbleibenden Schmierzustand gehalten werden.

Das aus den Gleitflächen 5 austretende überschüssige Schmierfett wird unter dem Einfluß der Fliehkraft radial nach außen geführt. Es sammelt sich vorzugsweise in dem hinter den Gleitflächen 5 und damit unterhalb der Ausgleichsgewichte 6 vorhandenen Raum 12, der das Anschlußende des Futterkolbens 4 umgibt. Aus diesem Raum 12 gelangt das überschüssige Schmierfett aufgrund der Fliehkraft zurück in den Hohlraum 8, da die das Ausgleichsgewicht 6 gegenüber dem Futterkörper 1 abdichtenden Dichtungen 13 zwar einen Austritt des Schmierfettes unter Schwerkraft verhindern, ihre Dichtwirkung aber nicht derart groß ist, daß sie den Durchtritt von Schmierfett unter dem Einfluß der Fliehkraft unterbinden. Auch die weiteren Spalten und Fugen innerhalb des Spannfutters verhindern zwar einen unerwünschten Austritt des Schmierfettes unter dem Einfluß der Schwerkraft, sind aber nicht so dicht, daß sie den Durchtritt des Schmierfettes verhindern, wenn dieses unter Fliehkrafteinfluß steht. Ausgenommen hiervon ist lediglich der Dichtring 14, der radial außerhalb der Hohlräume 8 angeordnet ist und die beiden Teile des Futterkörpers 1 gegeneinander abdichtet.

Bezugsziffernliste:

| | |
|---|---|
| A | Drehachse |
| 1 | Futterkörper |
| 1a | Bohrung |
| 2 | Schraube |
| 3 | Spannbacke |
| 3a | Keilhaken |
| 3b | Anbohrung |
| 3c | Schmierbohrung |
| 4 | Futterkolben |
| 4a | Innengewinde |
| 5 | Gleitfläche |
| 6 | Ausgleichsgewicht |
| 6a | Nut |
| 7 | Hebel |
| 7a | Bohrung |
| 8 | Hohlraum |
| 9 | Ringkanal |
| 10 | Versorgungskanal |

11 Schmiernippel
12 Raum
13 Dichtung
14 Dichtring

**Patentansprüche**

1. Kraftbetätigtes Spannfutter mit einem an einer drehend antreibbaren Spindel anzuordnenden Futterkörper (1) und in radialen Führungen des Futterkörpers (1) verschiebbar geführten Spannbacken (3), die durch mindestens ein im Futterkörper (1) verschiebbar geführtes, von einem druckmittelbetätigten Krafterzeuger betätigtes Antriebsglied (4) antreibbar sind, wobei im Futterkörper (1) mindestens ein mit Schmierfett befüllbarer Hohlraum (8) ausgebildet ist, der über Schmierbohrungen (6a,7a,3c) mit zumindest einigen der Gleitflächen (5) des Spannfutters in Verbindung steht und in den mindestens ein beim Antrieb der Spannbacken (3) bewegtes Futterbauteil (6) zur Erzeugung einer das Schmierfett in die Schmierbohrungen (6a,7a,3c) drückenden Pumpbewegung hineinragt,
   **dadurch gekennzeichnet,**
   daß jeder Spannbacke (3) ein an einer radial außenliegenden Stelle im Futterkörper (1) ausgebildeter Hohlraum (8) zugeordnet ist, in dem ein mit der jeweiligen Spannbacke (3) über einen im Futterkörper (1) abgestützten Hebel (7) verbundenes Ausgleichsgewicht (6) angeordnet ist, und daß jedes Ausgleichsgewicht (6) mit mindestens einer radial verlaufenden Nut (6a) zur Rückführung des aus den Gleitflächen austretenden Schmierfetts aufgrund der Fliehkraft in den Hohlraum (8) ausgebildet ist.

2. Spannfutter nach Anspruch 1, dadurch gekennzeichnet, daß die Hohlräume (8) über einen Ringkanal (9) miteinander sowie mittels eines Versorgungskanals (10) mit einem Schmiernippel (11) verbunden sind.

3. Spannfutter nach Anspruch 1 oder 2, dadurch gekennzeichnet, daß jede Spannbacke (3) mit Schmierbohrungen (3c) versehen ist, die über eine im Hebel (7) ausgebildete, einerseits in einer ein Hebelende aufnehmenden Anbohrung (3b) in der Spannbacke (3) und andererseits in der radial verlaufenden Nut (6a) im Ausgleichsgewicht (6) mündende Bohrung (7a) mit dem zugehörigen Hohlraum (8) verbunden sind.

**Claims**

1. Power-operated chuck having a chuck body (1) which is to be mounted on a rotationally drivable spindle, and having clamp jaws (3) which are slidably guided in radial guides in the chuck body (1) and which can be driven by at least one drive member (4) which is slidably guided in the chuck body (1) and is operated by a force generator actuated by a pressure medium, wherein at least one cavity (8) formed in the chuck body (1) can be filled with lubricating grease, is in communication via lubricating bores (6a, 7a, 3c) with at least some of the slide surfaces (5) of the chuck and projects into at least one chuck component (6), which is moved when the clamp jaws (3) are driven, for producing a pumping movement forcing the lubricating grease into the lubricating bores (6a, 7a, 3c), characterised in that a cavity (8) formed in the chuck body (1) in a radially outer position is allocated to each clamp jaw (3), in which cavity a balancing weight (6) connected to the respective clamp jaw (3) by means of a lever (7) supported in the chuck body (1) is disposed, and that each balancing weight (6) is formed with at least one radially extending groove (6a) for returning the lubricating grease passing out from the slide surfaces into the cavity (8) by means of centrifugal force.

2. Chuck according to Claim 1, characterised in that the cavities (8) are connected together by means of an annular channel (9) and to a lubricating nipple (11) by means of a supply channel (10).

3. Chuck according to Claim 1 or 2, characterised in that each clamp jaw (3) is provided with lubricating bores (3c) which are connected to the appertaining cavity (8) by way of a bore (7a) which is formed in the lever (7) and leads out on the one hand into a shallow bore (3b) formed in the clamp jaw (3) and receiving one end of the lever, and on the other hand into the radially extending groove (6a) in the balancing weight (6).

**Revendications**

1. Mandrin de serrage à commande de puissance comprenant un corps de mandrin (1) à disposer sur une broche susceptible d'être entraînée en rotation, et des mors de serrage (3) qui sont guidés de manière coulissante dans des guidages d'orientation radiale du corps de mandrin (1), et qui peuvent être entraînés par au moins un organe d'entraînement (4) guidé de manière coulissante dans le corps de mandrin (1) et actionné par un générateur de puissance sollicité par un fluide sous pression, au moins une cavité (8) pouvant être remplie par de la graisse étant formée dans le corps de mandrin (1), cette cavité communiquant par des perçages de graissage (6a, 7a, 3c) avec au moins certaines des surfaces de glissement (5) du mandrin de serrage, et au moins une pièce de mandrin (6), déplacée lors de l'entraînement des mors de serrage (3), s'engageant dans la cavité en vue d'engendrer un mouvement de pompage refoulant la graisse dans les perçages de graissage (6a, 7a, 3c), caractérisé en ce qu'à chaque mors de serrage (3) est associée une cavité (8) réalisée en un endroit situé radialement à l'extérieur dans le corps de mandrin (1), et dans laquelle est disposée une masselotte de compensation (6) reliée au mors de serrage (3) correspondant, par l'intermédiaire d'un levier (7) s'appuyant dans le corps de mandrin (1), et en ce que chaque masselotte de compensation (6) comporte au moins une rainure (6a) s'étendant radialement et destinée à ramener dans la cavité (8), la graisse s'échappant des surfaces de glissement en raison de la force centrifuge.

2. Mandrin de serrage selon la revendication 1, caractérisé en ce que les cavités (8) sont reliées entre-elles par l'intermédiaire d'un canal annulaire (9), et à un graisseur (11) par l'intermédiaire d'un canal d'alimentation (10).

3. Mandrin de serrage selon la revendication 1 ou 2, caractérisé en ce que chaque mors de serrage (3) est pourvu de perçages de graissage (3c) qui sont reliés à la cavité (8) associée, par l'intermédiaire d'un perçage (7a) qui est réalisé dans le levier (7), et qui débouche d'une part dans un alésage borgne (3b) recevant une extrémité du levier dans le mors de serrage (3), et d'autre part dans la rainure (6a) s'étendant radialement dans la masselotte de compensation (6).